# EUROPÄISCHE PATENTSCHRIFT

(11) **EP 1 537 904 B1**
(45) Veröffentlichungstag und Bekanntmachung des Hinweises auf die Patenterteilung: **28.03.2007**
(21) Anmeldenummer: 04024360.2
(22) Anmeldetag: 13.10.2004
(51) Int. Cl.: B01D 53/30, B01D 53/50, B01D 53/56, F23J 15/00

(54) **Verfahren zur Regelung der Dosierung eines Sorbens**
Process for controlling the dosing of a sorbent
Procédé pour réguler le dosage d'un sorbant

(30) Priorität: 04.12.2003 DE 10356590
(43) Veröffentlichungstag der Anmeldung: 08.06.2005
(73) Patentinhaber: Lentjes GmbH, 40880 Ratingen (DE)
(72) Erfinder: Herden, Hansjörg, Dr., 63110 Rodgau (DE); Stegemann, Berthold, 65760 Eschborn (DE); Gargoudis, Paschalis, 40878 Ratingen (DE)
(74) Vertreter: Rausch, Michael

(56) Entgegenhaltungen:
- EP-A- 0 103 881
- US-A- 6 033 639
- US-B1- 6 237 368

## Beschreibung

Gegenstand der Erfindung ist ein Verfahren zur Regelung der Dosierung eines Sorbens in nicht stöchiometrisch arbeitenden Verfahren zur Gasreinigung

Es sind bereits zahlreiche Verfahren zur Rauchgasreinigung bekannt, bei denen die Rauchgase mit einem Sorbens in Kontakt gebracht werden, mit dem die als Schadstoffe bekannten sauren Gasbestandteile, insbesondere Chlorwasserstoff, Schwefeltrioxid, Schwefeldioxid und Fluorwasserstoff entfernt werden.

Es ist aus zahlreichen Patentschriften bekannt, dass üblicherweise alkalische Neutralisationsmittel in Gasreinigungsverfahren eingesetzt werden. In der Regel wird dabei Kalziumhydroxid verwendet, welches trocken oder in Form von Kalkmilch in entsprechende Prozesse eingebracht wird. Die genannten Schadstoffe werden mittels Kalziumhydroxid zu den entsprechenden Reaktionssalzen umgesetzt und somit aus der Gasphase abgeschieden, wobei die Reaktionssalze anschließend als Feststoffe aus dem Prozess oder aus der Anlage ausgeschleust werden. Da für die bei der Neutralisation entstehenden Reaktionsprodukte kaum weitere Verwendungsmöglichkeiten bestehen, ist ihre Entsorgung kostspielig, d.h. sie müssen in der Regel deponiert werden. Es besteht deshalb der dringende Wunsch, die Menge der bei der Neutralisation entstehenden Reaktionsprodukte so klein wie nur irgend möglich zu halten.

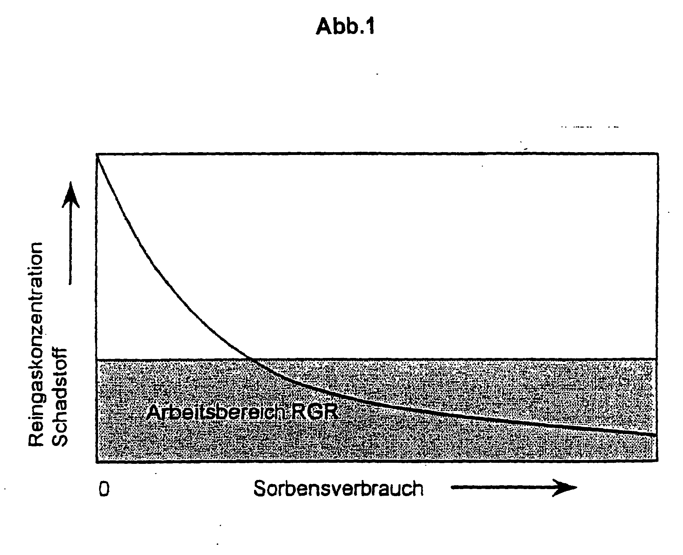

Die bei der Gasreinigung, insbesondere der Rauchgasreinigung nach thermischer Reststoffverwertung einzuhaltenden Emissionen sind gesetzlich festgelegt. Maßgebend sind hierfür derzeit z.B. die 17. BImSchV, die europäische Richtlinie 2000/76/EG und andere vergleichbare nationale Bestimmungen, in denen für einige Schadstoffe wie z.B. HCl Reingasemissionen gefordert werden, deren Einhaltung in der Regel Abscheidegrade von > 99 % erfordern. Um derartig hohe Reinigungseffekte zu erreichen, sind extrem hohe Sorbensverbräuche notwendig. Denn für alle bekannten Verfahren zur Rauchgasreinigung der vorstehend genannten Typen ist kennzeichnend, dass sie mit Sorbensverbräuchen arbeiten, die bei zunehmend größeren Abscheidegraden mit exponentiell ansteigenden Sorbensverbräuchen verbunden sind, wie es die Abb.1 zeigt.

In Abb.1 ist der Sorbensverbrauch als Funktion der Schadstoff-ReingasEmission schematisch dargestellt. Die Kurve zeigt, dass bei hohen Schadstoff-Konzentrationen schon kleine Sorbensmengen einen hohen Reinigungseffekt erreichen. Je weiter die Reinigung fortschreitet, desto höhere Mengen an Sorbens werden benötigt, um dann noch weitere Reinigungseffekte zu erreichen. Die letzten Spuren der Schadstoffe lassen sich nur noch mit einem unverhältnismäßig hohen Aufwand von Sorbens entfernen.

Es stellte sich deshalb die Aufgabe, ein Verfahren zur Regelung der Sorbensdosierung zu entwickeln, bei dem das zugesetzte Sorbens in optimaler Weise genutzt wird, also möglichst hohe Reinigungseffekte bei Zugabe möglichst geringer Mengen des Sorbens erreicht oder eine vorgegebene Reingaskonzentration mit einem minimalen Einsatz an Sorbens realisiert werden.

In den derzeit kommerziell betriebenen Rauchgasreinigungsanlagen werden üblicherweise so hohe Mengen an Sorbens zugegeben, dass die Tages- und Halbstundenmittelwerte für die jeweiligen Schadstoffkonzentrationen sicher eingehalten werden.

Die Vorgabe für die einzuhaltenden Schadstoffkonzentrationen erfolgt hierbei manuell in Form der Vorgabe eines "Reingaskonzentration- Sollwertes", wobei die Differenz zwischen der quasikontinuierlich am Kamin gemessenen Reingaskonzentration und den Sollwerten der Reingaskonzentrationen der zu begrenzenden Schadstoffe der Sorbensdosierung unmittelbar als Führungsgröße aufgeschaltet wird. Zur gesicherten Einhaltung der jeweiligen z.B. Tagesmittelwerte werden daher zumeist Sollwerte vorgegeben, die einen deutlichen "Sicherheitsabstand" zum gesetzlich einzuhaltenden Tagesmittelwert aufweisen.

Die Regelung folgt damit dem Prinzip, dass ein Emissionsmittelwert dann eingehalten wird, wenn jeder Momentanwert unter dem Sollwert liegt. Der Prozess wird damit ständig in einem Bereich hoher Betriebsmittelstöchiometrie und damit unwirtschaftlich betrieben. Als Folge steigt der Sorbensverbrauch überproportional an.

Gegenstand der vorliegenden Erfindung ist deshalb ein Verfahren zur Regelung der Dosierung eines zur Entfernung von Schadstoffen aus Abgasen verwendeten Sorbens, bei dem die Emissionskonzentrationen des oder der Schadstoffe in kurzen, regelmäßigen, zeitlichen Abständen (quasikontinuierlich) gemessen und die Differenz zwischen dem aus diesen Werten über den bisher abgelaufenen Betrachtungszeitraum gebildeten Mittelwert (z.B. dem Tages-, Stunden- oder Halbstundenmittelwert) und dem jeweils entsprechenden Sollwert für die Emissionskonzentration als Führungsgröße für die Sorbensdosierung zur Reduzierung der Emissionskonzentration des oder der Schadstoffe eingesetzt wird. Diese Vorgehensweise wird nachfolgend als "nach obiger Vorgehensweise" zitiert,

Enthält das Abgas nur einen abzuscheidenden Schadstoff, dann wird erfindungsgemäß die Differenz zwischen dem über den längsten zu betrachtenden Zeitraum für diesen Schadstoff nach obiger Vorgehensweise bestimmten Mittelwert über den bisher abgelaufenen Betrachtungszeitraum und dem entsprechenden Sollwert der Emissionskonzentration als Führungsgröße für die Sorbensdosierung zur Reduzierung der Emissionskonzentration dieses Schadstoffes eingesetzt.

Enthält das Abgas mehrere abzuscheidende Schadstoffe, dann wird erfindungsgemäß für den längsten zu betrachtenden Zeitraum, die größte auftretende Differenz eines nach obiger Vorgehensweise über den bisher abgelaufenen Betrachtungszeitraum bestimmten Mittelwertes eines Schadstoffes gegenüber dem für diesen Schadstoff festgelegten Sollwert der Emissionskonzentration als Führungsgröße für die Sorbensdosierung zur Reduzierung der Emissionskonzentrationen der Schadstoffe eingesetzt.

Hingegen ist die Differenz zwischen dem nach obiger Vorgehensweise bestimmten Mittelwert der Schadstoffkonzentration, der für den kürzesten, gesetzlich festgelegten Zeitraum (z.B. Halbstundenmittelwert) bestimmt wird, und dem entsprechenden Sollwert der Emissionskonzentration erfindungsgemäß als Führungsgröße heranzuziehen, wenn dieser Mittelwert einen bestimmten Prozentsatz des entsprechenden Sollwertes überschreitet.

Anders ist vorzugehen, wenn zu Beginn eines neuen zu betrachtenden Zeitraumes noch keine gebildeten Mittelwerte zur Verfügung stehen. Dann kann erfindungsgemäß die Differenz zwischen der aktuell gemessenen Emissionskonzentration des oder der Schadstoffe und dem entsprechenden Sollwert in für die betreffende Anlage spezifischen Zeiträumen als Führungsgröße für die Sorbensdosierung zur Reduzierung der Emissionskonzentration des oder der Schadstoffe so eingestellt werden, dass damit der Sollwert auch schon zu Beginn des Zeitraumes eingehalten wird.

Ein derartiges Verfahren greift auf die ohnehin vorhandenen, kontinuierlich arbeitenden Emissionsmessungen und Emissionsrechner zurück und benutzt ein Regelkonzept, das fortlaufend während eines zu betrachtenden Zeitraumes den nach obiger Vorgehensweise bis dahin effektiv erzielten Mittelwert für die Schadstoffemissionen errechnet und die Abweichung dieses Mittelwertes vom zugeordneten Sollwert der Emissionskonzentration über den vorgegebenen Betrachtungszeitraum als Führungsgröße der Sorbensdosierung heranzieht. Dabei wird der Sollwert für die Reingasemission dynamisch so verändert, dass die Abweichung zwischen den errechneten - und damit erreichten - Mittelwerten und der gesetzlichen Vorgabe am Ende des Betrachtungszeitraumes nahezu Null beträgt. Durch die so erzielte dynamische Anpassung des Sollwertes für die Schadstoffemission kann die tatsächlich erzielte mittlere Schadstoffemission über den vorgegebenen Betrachtungszeitraum an die erlaubte Obergrenze gefahren werden. Eine Reaktion der Sorbensdosierung auf kurzzeitige Schadstoffspitzen, die mit überproportional hohen Momentanverbräuchen verbunden wäre, wird dabei sicher vermieden.

Zusätzlich kann der Emissionsrechner als weitere Führungsgrößen für die Sorbensdosierung auch noch die durch kontinuierliche Messung ermittelten Stunden- oder Halbstundenmittelwerte einsetzen.

Die Regelung der Sorbensdosierung nach dem erfindungsgemäßen Verfahren hat eine deutliche Minimierung des Verbrauchs des eingesetzten Sorbens zur Folge. Dementsprechend vermindert sich auch die bei der Rauchgasreinigung anfallende Menge der Neutralisationsprodukte.

Ein besonderer Vorteil des erfindungsgemäßen Verfahrens ist darin zu sehen, dass keine Investitionen in zusätzliche Hardware erforderlich sind, da es sich erfindungsgemäß um eine reine Softwarelösung handelt. Bereits vorhandene Rauchgasreinigungsanlagen können erfindungsgemäß nachgerüstet werden und dadurch deren Sorbensverbrauch gesenkt werden.

Es liegt auf der Hand, dass die das erfindungsgemäße Verfahren einsetzenden Anlagen erheblich wirtschaftlicher arbeiten, als alle anderen Typen von Rauchgasreinigungsanlagen mit konventioneller Regelung.

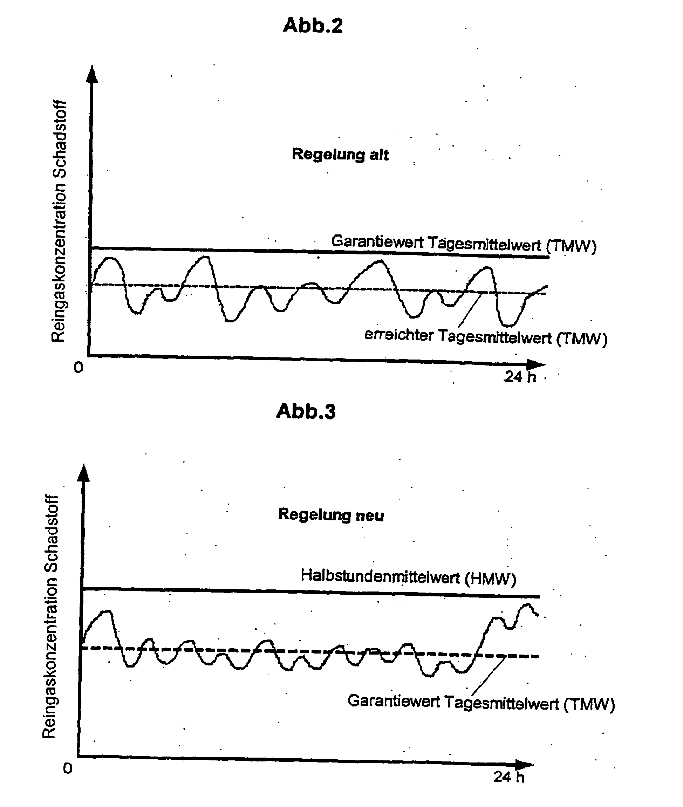

Das erfindungsgemäße Verfahren wird durch die Abb. 2 und 3 veranschaulicht.

Die Abb. 2 zeigt die bisher übliche Regelung des Sorbensverbrauches, bei dem der Sorbensverbrauch so gesteuert wird, dass ein garantierter Tagesmittelwert mit Sicherheit nicht überschritten werden kann. Dieser Tagesmittelwert weist einen erheblichen Sicherheitsabstand gegenüber den tatsächlich auftretenden Emissionen auf mit der Folge, dass ein erheblicher Anteil des Sorbens zur Neutralisation überhaupt nicht genutzt wird.

Abb. 3 zeigt demgegenüber das erfindungsgemäße Verfahren. Die entscheidende Führungsgröße für den Sorbensverbrauch ist dabei z.B. die Differenz zwischen dem mit Hilfe eines Emissionsrechners ermittelten, über den verstrichenen Betrachtungszeitraum erzielten Tagesmittelwert der Schadstoffkonzentration und derem Sollwert. Wird die zu begrenzende Emissionskonzentration eines Schadstoffes kurzfristig erheblich derart überschritten, dass die Einhaltung z.B. vorgegebener Halbstunden- oder Stundenmittelwerte gefährdet ist, wird momentan als übergeordnete Führungsgröße bei ansonsten analoger Vorgehensweise der einzuhaltende Stunden- oder Halbstundenmittelwert für die Sorbensdosierung eingesetzt. Dies gilt auch dann, wenn der gleichzeitig zu betrachtende Tagesmittelwert nicht gefährdet ist.

Die Vorteile des erfindungsgemäßen Verfahrens bei der Ersparnis an Betriebsmittel- und Entsorgungskosten zeigen sich durch die nachfolgende Beispielsrechnung:

| | | |
|---|---|---|
| Anlage | Modellrechnung | |
| Typ RGR | Sprühabsorber | |
| Anzahl Linien | 1 | |
| Rohgasseite | | |
| (Daten je Linie) | | |
| V_{Nf}. | 100.000,00 | Nm³/h |
| V_{N,tr.} | 85.000,00 | Nm³/h |

| **Schadstoff-Konzentrationen (11 Vol.-% O_{2,tr}f)** | | |
|---|---|---|
| HCl | 1.250,00 | mg/Nm³ |
| SO₂ | 400,00 | mg/Nm³ |
| O₂ | 9,00 | Vol.-%_{,tr} |

| **Reingasseite (11 Vol.-%O_{2,tr})** | | |
|---|---|---|
| HCl | 10,00 | mg/Nm³ |
| SO₂ | 50,00 | mg/Nm³ |
| | | |

| **Sorbensbedarf** | | |
|---|---|---|
| Regelung "alt" = | 450 kg/h | |
| Regelung "neu" = | 420 kg/h | |

| **Reststoffproduktion** | | |
|---|---|---|
| Reststoffproduktion Regelung "alt" = | 920 kg/h | |
| Reststoffproduktion Regelung "neu" = | 880 kg/h | |

## Patentansprüche

1. Verfahren zur Regelung der Dosierung eines zur Entfernung von Schadstoffen aus Abgasen verwendeten Sorbens, **dadurch gekennzeichnet, dass** die Emissionskonzentrationen im Reingas des oder der Schadstoffe in kurzen, regelmäßigen, zeitlichen Abständen (quasikontinuierlich) gemessen und die Differenz zwischen dem aus diesen Messwerten gebildeten Mittelwert über den Betrachtungszeitraum und dem Sollwert der Emissionskonzentration als Führungsgröße für die Sorbensdosierung zur Reduzierung der Emissionskonzentration des oder der Schadstoffe eingesetzt wird.

2. Verfahren nach Anspruch 1, **dadurch gekennzeichnet, dass** bei nur einem aus dem Abgas abzuscheidenden Schadstoff die Differenz zwischen dem über den längsten betrachteten Zeitraum nach obiger Vorgehensweise für diesen Schadstoff bestimmten Mittelwert für die Emissionskonzentration und dem Sollwert für die Emissionskonzentration als Führungsgröße für die Sorbensdosierung zur Reduzierung der Gaskonzentration dieses Schadstoffes eingesetzt wird.

3. Verfahren nach Anspruch 1, **dadurch gekennzeichnet, dass** bei mehreren aus dem Abgas abzuscheidenden Schadstoffen die Differenz zwischen dem über den längsten betrachteten Zeitraum nach obiger Vorgehensweise bestimmten Mittelwert desjenigen Schadstoffes und seinem zugeordneten Sollwert für die Emissionskonzentration, der die größte Abweichung gegenüber dem für diesen Schadstoff festgelegten Sollwert aufweist, als Führungsgröße für die Sorbensdosierung zur Reduzierung der Gaskonzentration der Schadstoffe eingesetzt wird

4. Verfahren nach Anspruch 1, **dadurch gekennzeichnet, dass** für den kürzesten, gesetzlich festgelegten, zu betrachtenden Zeitraum der Mittelwert der Emissionskonzentration eines Schadstoffes nach obiger Vorgehensweise über den jeweils vorangegangenen Zeitraum bestimmt wird und die Differenz zwischen dem so gebildeten Mittelwert und dem zugeordneten Sollwert für die Emissionskonzentration dann als Führungsgröße für die Sorbensdosierung herangezogen wird, wenn dieser Mittelwert einen bestimmten Prozentsatz des Sollwertes für diesen zu betrachtenden Zeitraum überschreitet.

5. Verfahren nach Anspruch 1, **dadurch gekennzeichnet, dass** zum Beginn eines neuen Regelzeitraumes, in dem noch keine Mittelwerte zur Verfügung stehen, die Differenz zwischen der aktuell gemessenen Emissionskonzentration des oder der Schadstoffe und dem entsprechenden Sollwert für die jeweilige Emissionskonzentration in für die jeweilige Anlage notwendigen spezifischen Zeiträumen vorübergehend als Führungsgröße für die Sorbensdosierung zur Reduzierung der Emissionskonzentration des oder der Schadstoffe so eingestellt wird, dass damit der Sollwert der Emissionskonzentration auch schon zu Beginn des Zeitraumes eingehalten wird.

## Claims

1. Method for controlling the metering of a sorbent used for the removal of harmful substances from exhaust, **characterised in that** the emission concentration in the clean gas of the harmful substance(s) is measured in short, regular time intervals (quasi-continuously), and the difference between the average value, formed from the measured values, over the time period under observation, and the reference value for the emission concentration is used as a control variable for the sorbent metering for the reduction of the emission concentration of this harmful substance.

2. Method according to claim 1, **characterised in that** if only one harmful substance is to be removed from the exhaust, the difference between the average value for the emission concentration determined over the longest observed time period, according to the above procedure, for this harmful substance, and the reference value for the emission concentration is used as the control variable for the sorbent metering for the reduction of the gas concentration of this harmful substance.

3. Method according to claim 1, **characterised in that**, if a plurality of harmful substances is to be removed from the exhaust, the difference between the average value for that harmful substance that has the largest difference compared to the reference value established for this harmful substance, determined over the longest observed time period, according to the above procedure, and the assigned reference value for the emission concentration, is used as the control variable for the sorbent metering for the reduction of the gas concentration of this harmful substance.

4. Method according to claim 1, **characterised in that** for the shortest time period to be observed, established by law, the average value of the emission concentration of a harmful substance determined according to the above procedure over the respectively elapsed time period, and the difference between the average value so determined and the assigned reference value for the emission concentration is then used as the control variable for the sorbent metering, if this average value exceeds a determined percentage of the reference value for this time period to be observed.

5. Method according to claim 1, **characterised in that** at the beginning of a new control time period, in which no average values are available, the difference between the current measured emission concentration of the harmful substance(s) and the corresponding reference value for the respective emission concentration, in the specific time period required for the respective facility, is temporarily used as the control variable for the sorbent metering for the reduction of the emission concentration of the harmful substance(s), that in so doing the reference value of the emission concentration is also maintained at the beginning of the time period.

## Revendications

1. Procédé pour réguler le dosage d'un sorbant utilisé pour éliminer des polluants dans des gaz de combustion, **caractérisé en ce que** les concentrations d'émissions du ou des polluants dans le gaz pur sont mesurées à intervalles réguliers et rapprochés dans le temps (quasiment en continu) et la différence entre la moyenne calculée à partir de ces valeurs de mesure sur la période d'observation et la consigne de concentration d'émission est utilisée comme grandeur de contrôle pour le dosage du sorbant en vue de réduire la concentration d'émission du ou des polluants.

2. Procédé selon la revendication 1, **caractérisé en ce que** lorsqu'un seul polluant doit être séparé des gaz de combustion, la différence entre la moyenne de concentration d'émission déterminée de la manière décrite ci-dessus pour ce polluant pendant la plus longue période considérée et la valeur de consigne correspondante pour la concentration d'émission est utilisée comme grandeur de contrôle pour le dosage du sorbant en vue de réduire la concentration de ce polluant dans les gaz.

3. Procédé selon la revendication 1, **caractérisé en ce que** lorsque plusieurs polluants doivent être séparés des gaz de combustion, la différence entre la moyenne de concentration d'émission déterminée de la manière décrite ci-dessus pendant la plus longue période considérée pour le polluant présentant le plus fort écart par rapport à la consigne fixée pour ce polluant et la valeur de consigne correspondante pour la concentration d'émission est utilisée comme grandeur de contrôle pour le dosage du sorbant en vue de réduire la concentration des polluants dans les gaz.

4. Procédé selon la revendication 1, **caractérisé en ce que** pour le plus court intervalle de temps fixé par la loi à prendre en compte, la moyenne de la concentration d'émission d'un polluant est calculée selon la méthode ci-dessus sur l'intervalle précédent et la différence entre la moyenne ainsi calculée et la consigne correspondante d'émission de concentration est utilisée comme grandeur de contrôle du dosage du sorbant si cette moyenne dépasse un certain pourcentage de la consigne pour cet intervalle de temps à considérer.

5. Procédé selon la revendication 1, **caractérisé en ce qu'**au début d'un nouvel intervalle de régulation pour lequel il n'y a pas encore de moyennes, la différence entre la concentration d'émission du ou des polluants mesurée actuellement et la consigne correspondante de concentration d'émission de chacun est provisoirement réglée comme grandeur de contrôle pour le dosage du sorbant en vue de réduire la concentration d'émission du ou des polluants, à des intervalles spécifiques nécessaires pour l'installation en question, de telle sorte que la valeur de consigne de la concentration d'émission soit respectée dès le début de l'intervalle de temps.
